# EUROPEAN PATENT APPLICATION

(11) **EP 4 668 856 A1**
(43) Date of publication of application: **24.12.2025**
(21) Application number: 24756098.0
(22) Date of filing: 05.02.2024
(51) Int. Cl.: H04W 36/00

(54) **CELL RESELECTION METHOD AND DEVICE, AND TERMINAL**

(30) Priority: 15.02.2023 CN 202310140901
(71) Applicant: Datang Mobile Communications Equipment Co., Ltd., Beijing 100085 (CN)
(72) Inventor: LU, Yang, Beijing 100085 (CN); CHEN, Li, Beijing 100085 (CN)
(74) Representative: Ipsilon
(86) International application number: PCT/CN2024/075948
(87) International publication number: WO 2024/169724

(57) **Abstract**

Embodiments of the present disclosure relate to the technical field of communications, and provide a cell reselection method and device. The method comprises: determining whether a terminal moves synchronously with a mobile integrated access and backhaul (IAB) cell; and executing a cell reselection according to a determination result.

## Description

### CROSS-REFERENCES TO RELATED APPLICATIONS

The present application claims priority to Chinese patent application No. 202310140901.X filed on February 15, 2023, entitled "Cell Reselection Method and Device, and Terminal", which is hereby incorporated by reference in its entirety.

### FIELD

The present application relates to the field of communications, and in particular to a cell reselection method and apparatus, and a terminal.

### BACKGROUND

In the 3rd generation partnership project (3GPP), static integrated access and backhaul (IAB) nodes are studied and standardized. In case of performing a cell reselection, considering that a static IAB cell controlled by a static IAB-node is similar to a traditional cell, a terminal may perform the cell reselection operation according to traditional cell reselection criteria.

However, with an introduction of a concept of mobile IAB-node, how to perform a cell reselection in a mobile IAB-node scenario becomes a problem that needs to be solved urgently by those skilled in the art.

### BRIEF SUMMARY

Embodiments of the present application provide a cell reselection method and apparatus, and a terminal, which may effectively avoid unnecessary ping-pong cell reselection operations in case of performing cell reselection operations in a mobile integrated access and backhaul (IAB) node scenario, to reduce terminal power consumption.

An embodiment of the present application provides a cell reselection method, performed by a terminal, the cell reselection method including:
determining whether the terminal moves synchronously with a mobile integrated access and backhaul (IAB) cell; and
performing a cell reselection based on a determination result.

In an embodiment, determining whether the terminal moves synchronously with the mobile IAB cell includes:
determining whether the terminal moves synchronously with the mobile IAB cell based on an associated parameter of the mobile IAB cell;
where the associated parameter includes at least one of following:
   a reference signal received power;
   a reference signal received quality; or
   a relative distance between the terminal and the mobile IAB cell.

In an embodiment, determining whether the terminal moves synchronously with the mobile IAB cell based on the associated parameter of the mobile IAB cell includes:
in case that a first given condition is satisfied, the determination result is that the terminal moves synchronously with the mobile IAB cell, where the first given condition includes that a variation amount of the associated parameter is lower than a first given value and lasts for a first given duration;
   or,
in case that a first given condition is not satisfied, the determination result is that the terminal does not move synchronously with the mobile IAB cell;
   or,
in case that a second given condition is satisfied, the determination result is that the terminal does not move synchronously with the mobile IAB cell, where the second given condition includes that a variation amount of the associated parameter is higher than a second given value and lasts for a second given duration.

In an embodiment, performing the cell reselection operation based on the determination result includes:
if the determination result is that the terminal moves synchronously with the mobile IAB cell, in case that the mobile IAB cell satisfies an S criterion, an intra-frequency measurement and an inter-frequency measurement for cell reselection are not carried out.

In an embodiment, performing the cell reselection operation based on the determination result includes:
if the determination result is that the terminal moves synchronously with the mobile IAB cell, in case that it is determined to perform the cell reselection operation, a reselection priority of the mobile IAB cell is higher than a reselection priority of other cells with a same frequency.

In an embodiment, performing the cell reselection operation based on the determination result includes:
if the determination result is that the terminal moves synchronously with the mobile IAB cell, in case that it is determined to perform the cell reselection operation, a reselection priority of a frequency corresponding to the mobile IAB cell is higher than a reselection priority of other frequencies.

In an embodiment, performing the cell reselection operation based on the determination result includes:
if the determination result is that the terminal does not move synchronously with the mobile IAB cell, in case that it is determined to perform the cell reselection operation, a reselection priority of the mobile IAB cell is lower than a reselection priority of other cells with a same frequency.

In an embodiment, performing the cell reselection operation based on the determination result includes:
if the determination result is that the terminal does not move synchronously with the mobile IAB cell, in case that it is determined to perform the cell reselection operation, a reselection priority of a frequency corresponding to the mobile IAB cell is lower than a reselection priority of other frequencies.

In an embodiment, determining whether the terminal moves synchronously with the mobile IAB cell includes:
receiving a system broadcast message; and
identifying the mobile IAB cell and determining whether the terminal moves synchronously with the mobile IAB cell.

In an embodiment, identifying the mobile IAB cell includes:
determining a cell as the mobile IAB cell by a mobile IAB cell type identifier included in the system broadcast message.

An embodiment of the present application provides a terminal, including: a memory, a transceiver, and a processor,
where the memory is used for storing a computer program; the transceiver is used for receiving and transmitting data under control of the processor; and the processor is used for reading the computer program in the memory and performing following operations:
determining whether the terminal moves synchronously with a mobile integrated access and backhaul (IAB) cell; and
performing a cell reselection based on a determination result.

In an embodiment, determining whether the terminal moves synchronously with the mobile IAB cell includes:
determining whether the terminal moves synchronously with the mobile IAB cell based on an associated parameter of the mobile IAB cell;
where the associated parameter includes at least one of following:
   a reference signal received power;
   a reference signal received quality; or
   a relative distance between the terminal and the mobile IAB cell.

In an embodiment, determining whether the terminal moves synchronously with the mobile IAB cell based on the associated parameter of the mobile IAB cell includes:
in case that a first given condition is satisfied, the determination result is that the terminal moves synchronously with the mobile IAB cell, where the first given condition includes that a variation amount of the associated parameter is lower than a first given value and lasts for a first given duration;
   or,
in case that a first given condition is not satisfied, the determination result is that the terminal does not move synchronously with the mobile IAB cell;
   or,
in case that a second given condition is satisfied, the determination result is that the terminal does not move synchronously with the mobile IAB cell, where the second given condition includes that a variation amount of the associated parameter is higher than a second given value and lasts for a second given duration.

In an embodiment, performing the cell reselection operation based on the determination result includes:
if the determination result is that the terminal moves synchronously with the mobile IAB cell, in case that the mobile IAB cell satisfies an S criterion, an intra-frequency measurement and an inter-frequency measurement for cell reselection are not carried out.

In an embodiment, performing the cell reselection operation based on the determination result includes:
if the determination result is that the terminal moves synchronously with the mobile IAB cell, in case that it is determined to perform the cell reselection operation, a reselection priority of the mobile IAB cell is higher than a reselection priority of other cells with a same frequency.

In an embodiment, performing the cell reselection operation based on the determination result includes:
if the determination result is that the terminal moves synchronously with the mobile IAB cell, in case that it is determined to perform the cell reselection operation, a reselection priority of a frequency corresponding to the mobile IAB cell is higher than a reselection priority of other frequencies.

In an embodiment, performing the cell reselection operation based on the determination result includes:
if the determination result is that the terminal does not move synchronously with the mobile IAB cell, in case that it is determined to perform the cell reselection operation, a reselection priority of the mobile IAB cell is lower than a reselection priority of other cells with a same frequency.

In an embodiment, performing the cell reselection operation based on the determination result includes:
if the determination result is that the terminal does not move synchronously with the mobile IAB cell, in case that it is determined to perform the cell reselection operation, a reselection priority of a frequency corresponding to the mobile IAB cell is lower than a reselection priority of other frequencies.

In an embodiment, determining whether the terminal moves synchronously with the mobile IAB cell includes:
receiving a system broadcast message; and
identifying the mobile IAB cell and determining whether the terminal moves synchronously with the mobile IAB cell.

In an embodiment, identifying the mobile IAB cell includes:
determining a cell as the mobile IAB cell by a mobile IAB cell type identifier included in the system broadcast message.

An embodiment of the present application provides a cell reselection apparatus, used in a terminal, the cell reselection apparatus including:
a processing unit, used for determining whether the terminal moves synchronously with a mobile integrated access and backhaul (IAB) cell; and
a performing unit, used for performing a cell reselection based on a determination result.

In an embodiment, the processing unit is used for determining whether the terminal moves synchronously with the mobile IAB cell based on an associated parameter of the mobile IAB cell;
where the associated parameter includes at least one of following:
a reference signal received power;
a reference signal received quality; or
a relative distance between the terminal and the mobile IAB cell.

In an embodiment, the processing unit is used for:
in case that a first given condition is satisfied, the determination result is that the terminal moves synchronously with the mobile IAB cell, where the first given condition includes that a variation amount of the associated parameter is lower than a first given value and lasts for a first given duration;
   or,
in case that a first given condition is not satisfied, the determination result is that the terminal does not move synchronously with the mobile IAB cell;
   or,
in case that a second given condition is satisfied, the determination result is that the terminal does not move synchronously with the mobile IAB cell, where the second given condition includes that a variation amount of the associated parameter is higher than a second given value and lasts for a second given duration.

In an embodiment, the performing unit is used for:
if the determination result is that the terminal moves synchronously with the mobile IAB cell, in case that the mobile IAB cell satisfies an S criterion, an intra-frequency measurement and an inter-frequency measurement for cell reselection are not carried out.

In an embodiment, the performing unit is used for:
if the determination result is that the terminal moves synchronously with the mobile IAB cell, in case that it is determined to perform the cell reselection operation, a reselection priority of the mobile IAB cell is higher than a reselection priority of other cells with a same frequency.

In an embodiment, the performing unit is used for:
if the determination result is that the terminal moves synchronously with the mobile IAB cell, in case that it is determined to perform the cell reselection operation, a reselection priority of a frequency corresponding to the mobile IAB cell is higher than a reselection priority of other frequencies.

In an embodiment, the performing unit is used for:
if the determination result is that the terminal does not move synchronously with the mobile IAB cell, in case that it is determined to perform the cell reselection operation, a reselection priority of the mobile IAB cell is lower than a reselection priority of other cells with a same frequency.

In an embodiment, the performing unit is used for:
if the determination result is that the terminal does not move synchronously with the mobile IAB cell, in case that it is determined to perform the cell reselection operation, a reselection priority of a frequency corresponding to the mobile IAB cell is lower than a reselection priority of other frequencies.

In an embodiment, the cell reselection apparatus further includes a receiving unit, used for receiving a system broadcast message;
the processing unit is used for identifying the mobile IAB cell and determining whether the terminal moves synchronously with the mobile IAB cell.

In an embodiment, the processing unit is used for:
determining a cell as the mobile IAB cell by a mobile IAB cell type identifier included in the system broadcast message.

An embodiment of the present application further provides a processor-readable storage medium, where the processor-readable storage medium stores a computer program, the computer program is used to cause a processor to perform the steps of the candidate cell switching method as described above.

In the cell reselection method and apparatus provided by the embodiments of the present application, it is determined whether the terminal moves synchronously with the mobile IAB cell, and the cell reselection operation is performed based on the determination result, which fully considers an influence of the determination result on a ping-pong cell reselection operation. As such, unnecessary ping-pong cell reselection may be effectively avoided, to reduce terminal power consumption.

### BRIEF DESCRIPTION OF THE DRAWINGS

To clearly illustrate the solutions in the embodiments of the present application, the drawings used in the description of the embodiments are briefly described below. The drawings in the following description are only some embodiments of the present application, and other drawings may be obtained according to these drawings without any creative effort for those skilled in the art.
FIG. 1 is a schematic diagram of an integrated access and backhaul (IAB) network architecture in a stand-alone (SA) mode according to an embodiment of the present application;
FIG. 2 is a schematic diagram of an IAB network architecture in an evolved-universal terrestrial radio access-new radio (E-UTRA-NR) dual connectivity (EN-DC) mode according to an embodiment of the present application;
FIG. 3 is a schematic flowchart of a cell reselection method according to an embodiment of the present application;
FIG. 4 is a schematic diagram of a first application scenario according to an embodiment of the present application;
FIG. 5 is a schematic diagram of a second application scenario according to an embodiment of the present application;
FIG. 6 is a schematic diagram of a third application scenario according to an embodiment of the present application;
FIG. 7 is a schematic structural diagram of a terminal according to an embodiment of the present application; and
FIG. 8 is a schematic structural diagram of a cell reselection apparatus according to an embodiment of the present application.

### DETAILED DESCRIPTION

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

In the embodiments of the present application, the term "multiple" refers to two or more than two, and other quantifiers are similar to it.

The solutions according to the embodiments of the present application may be applicable to a variety of systems, such as a 5G system.

The terminal in the embodiments of the present application may be a device that provides voice and/or data connectivity to a user, a handheld device with a wireless connection function, or other processing devices connected to a wireless modem. In different systems, the names of the terminal may be different. For example, in the 5G system, the terminal may be called as a user equipment (UE). A wireless terminal device may communicate with one or more core networks (CNs) via a radio access network (RAN), and the wireless terminal device may be a mobile terminal device, such as a mobile phone (or cellular phone), and a computer with mobile terminal device, e.g., a portable mobile device, a pocket-sized mobile device, a handheld mobile device, a computer-built-in mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be called a system, a subscriber unit, a subscriber station, a mobile station, a mobile, a remote station, an access point, a remote terminal, an access terminal, a user terminal, a user agent, or a user device, which is not limited in the embodiments of the present application.

The network device in the embodiments of the present application may be a base station, and the base station may include multiple cells providing services for the terminal. Depending on the specific scenario, the base station may be called an access point, or a device communicating with a wireless terminal device through one or more sectors on the air interface in the access network, or other names. The network device may be used for exchanging received air frames with Internet Protocol (IP) packets, and acting as a router between the wireless terminal device and the rest of the access network, where the rest of the access network may include an IP communication network. The network device may also coordinate attribute management for the air interface. For example, the network device in the embodiments of the present application may be a base transceiver station (BTS) in a global system for mobile communications (GSM) or a code division multiple access (CDMA), a node B in a wide-band code division multiple access (WCDMA), an evolutional node B (eNB or e-Node B) in a long term evolution (LTE) system, a 5G base station (gNB) in 5G network architecture (next generation system), a home evolved node B (HeNB), a relay node, a femto, or a pico base station (pico), etc., which is not limited in the embodiments of the present application. In some network structures, the network device may include a centralized unit (CU) node and a distributed unit (DU) node, and the centralized unit and the distributed unit may be geographically separated.

A multi-input multi-output (MIMO) transmission may be performed between the network device and the terminal device by using one or more antennas. The MIMO transmission may be single-user MIMO (SU-MIMO) or multi-user MIMO (MU-MIMO). Depending on the form and number of antenna combinations, MIMO transmission may be 2D-MIMO, 3D-MIMO, FD-MIMO or massive-MIMO, and may also be diversity transmission, precoding transmission, beamforming transmission, etc.

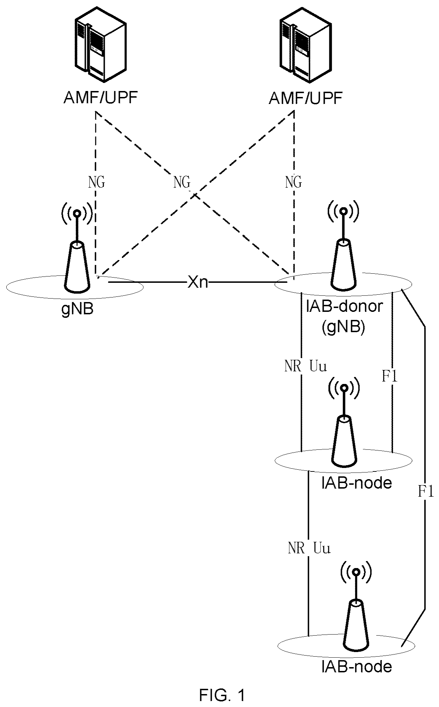

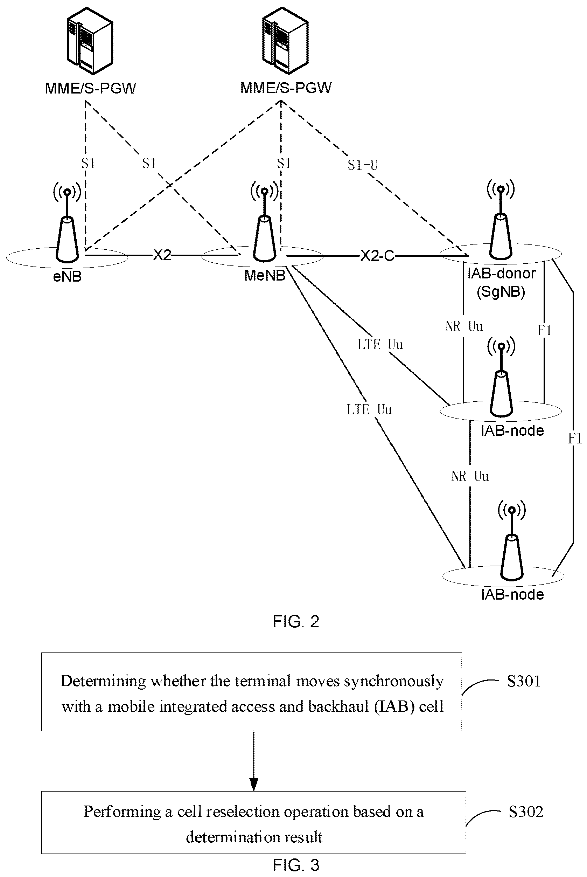

In the 3rd generation partnership project (3GPP), an integrated access and backhaul (IAB) network architecture has been studied and discussed. Taking an IAB network architecture in a stand-alone (SA) mode and an IAB network architecture in an evolved-universal terrestrial radio access-new radio (E-UTRA-NR) dual connectivity (EN-DC) mode as examples, for example, as shown in FIG. 1 and FIG. 2, FIG. 1 is a schematic diagram of the IAB network architecture in the SA mode according to an embodiment of the present application and FIG. 2 is a schematic diagram of the IAB network architecture in the EN-DC mode according to an embodiment of the present application. In the IAB network architecture shown in FIG. 1, an IAB-node may access a network through the SA mode. In the IAB network architecture shown in FIG. 2, an IAB-node may access a network through the EN-DC mode.

A relay node may be recorded as an IAB-node, and the IAB-node supports both access and backhaul functions. An access node of the last-hop at the network device side may be recorded as an IAB-donor, and the IAB-donor supports gNB functions and IAB-node access. All user data may be backhauled to the IAB-donor via the IAB-node through single or multiple hops. For example, the functions of the IAB-node may include two parts, where one part is gNB-DU function (called IAB-DU), and the other part is terminal function (called IAB-MT). IAB-DU is used to implement network device side functions, serving one or more cells and connecting to a downstream child IAB-node, providing new radio (NR) air interface access to the terminal and the downstream child IAB-node, and establishing an F1 connection with an IAB donor-CU. IAB-MT is used to implement some terminal device functions, connecting to an upstream parent IAB-node or IAB-donor DU. IAB-MT includes functions of physical layer, layer 2, radio resource control (RRC) and non-access-stratum (NAS) layer, and is indirectly connected to IAB donor-CU and core network.

It should be noted that the relevant device functions and transmission protocols under the IAB network architecture may refer to the relevant description of the related art, which are not described in detail in the embodiments of the present application.

Under the IAB network architecture, static IAB-nodes are studied and standardized. A static IAB cell controlled by a static IAB-node is similar to a traditional cell, which may be referred to cell handover of traditional cells. With a discussion of mobile IAB-nodes, unlike static IAB-nodes, a support for mobility scenario is added for the mobile IAB-nodes, for example, IAB-nodes may be equipped on high-speed or low-speed moved vehicles to serve terminals on the vehicles.

For example, according to a traditional cell reselection technology, in case that a vehicle equipped with an IAB-node moves to a macro cell with a stronger signal or other cells with a higher priority for the terminals on the vehicle, the terminals on the vehicle originally camping in an IAB cell may reselect to the macro cell with a stronger signal or other cells with a higher priority; and in case that the vehicle equipped with the IAB-node moves away from the macro cell with a stronger signal or other cells with a higher priority, the terminal on the vehicle will reselect back to the mobile IAB cell on the vehicle, resulting in unnecessary ping-pong cell reselection, increasing the power consumption of the terminal and affecting the quality of service for users. For another example, according to a traditional cell reselection technology, in case that a vehicle equipped with an IAB-node moves close to a user outside the vehicle, the user outside the vehicle may reselect from other cells to the mobile IAB cell on the vehicle, and in case that the vehicle moves away from the user, the user reselects back to other cells, which also results in unnecessary ping-pong cell reselection, increasing the power consumption of the terminal and affecting the quality of service for the user.

In order to effectively avoid unnecessary ping-pong cell reselection and thus reduce terminal power consumption, in the embodiments of the present application, whether the terminal moves synchronously with the mobile IAB cell (that is, whether the terminal and the IAB cell move on the same vehicle, ship, airplane or other means of transportation) is considered to be an important factor affecting the ping-pong cell reselection operation. In the cell reselection method provided in the embodiments of the present application, in case of performing a cell reselection in a mobile IAB-node scenario, a cell reselection is performed based on a determination result of whether a terminal moves synchronously with a mobile IAB cell, which fully considers an impact of the determination result on ping-pong cell reselection operation. In this way, unnecessary ping-pong cell reselection may be effectively avoided, to reduce terminal power consumption.

The solutions in the embodiments of the present application are clearly and completely described in the following with reference to the accompanying drawings in the embodiments of the present application. These embodiments are only a part of the embodiments of the present application, and not all of the embodiments. All other embodiments obtained by those skilled in the art based on the embodiments of the present application without any creative effort belong to the scope of the present application.

FIG. 3 is a schematic flowchart of a cell reselection method according to an embodiment of the present application, where the cell reselection method is performed by a terminal. As shown in FIG. 2, the cell reselection method includes:
S301: determining whether the terminal moves synchronously with a mobile integrated access and backhaul (IAB) cell.

In an embodiment, before determining whether the terminal moves synchronously with the mobile IAB cell, it is generally necessary to first determine whether an associated cell is a mobile cell. If the associated cell is not a mobile cell, there is no need to perform the above-mentioned determination operation. If the associated cell is a mobile IAB cell, it is further determined whether the terminal moves synchronously with the mobile IAB cell, that is, only in case that it is determined that the associated cell is a mobile IAB cell, it is determined whether the terminal moves synchronously with the mobile IAB cell.

Based on the above considerations, for example, in case of determining whether the terminal moves synchronously with the mobile IAB cell, a system broadcast message of the associated cell may be received first, and the mobile IAB cell may be identified based on the system broadcast message and whether the terminal moves synchronously with the mobile IAB cell may be determined. In an embodiment, in case that the system broadcast message includes a mobile IAB cell type identifier, it is indicated that the associated cell is a mobile IAB cell, and then whether the terminal moves synchronously with the mobile IAB cell is determined.

For example, in case of determining whether the associated cell is a mobile IAB cell based on the system broadcast message, the system broadcast message may include a mobile IAB cell type identifier. For example, in case that an IAB-node has a capability to support mobility (including a capability to migrate IAB-DU), a cell system broadcast message of the IAB-node may carry the mobile IAB cell type identifier regardless of whether the IAB-node is in a mobile state. For another example, in case that the IAB-node with a mobility capability is in a mobile state, a cell system broadcast message of the IAB-node may carry the mobile IAB cell type identifier. For another example, only in case that the IAB-node with a mobility capability is in a mobile state and a moving speed exceeds a certain threshold, a cell system broadcast message of the IAB-node may carry the mobile IAB cell type identifier. As such, the terminal may determine whether the associated cell is a mobile IAB cell based on the system broadcast message. In an embodiment, in case that the mobile IAB cell type identifier is not included in the system broadcast message, it means that the terminal does not need to treat the cell as a mobile IAB cell, that is, the cell is treated as a fixed cell or a normal cell.

By determining whether the terminal moves synchronously with the mobile IAB cell, a cell reselection may be performed based on a determination result, that is, the following S302 is performed.

S302: performing a cell reselection based on a determination result.

It may be seen that in the embodiments of the present application, in case of performing a cell reselection in a mobile IAB-node scenario, by determining whether the terminal moves synchronously with the mobile IAB cell and performing the cell reselection operation based on the determination result, an influence of the determination result on a ping-pong cell reselection operation is fully considered. As such, unnecessary ping-pong cell reselection may be effectively avoided, to reduce terminal power consumption.

For example, based on the embodiment shown in FIG. 3, in S301, it is determined whether the terminal moves synchronously with the mobile IAB cell, where it may be determined whether the terminal moves synchronously with the mobile IAB cell based on an associated parameter of the mobile IAB cell. The associated parameter includes at least one of following:
a reference signal received power;
a reference signal received quality; or
a relative distance between the terminal and the mobile IAB cell.

In an embodiment, the above is only described by taking at least one of the reference signal received power, the reference signal received quality, or the relative distance between the terminal and the mobile IAB cell as an example. However, other similar associated parameters may also be included and may be set according to actual needs.

For example, in an embodiment of the present application, determining whether the terminal moves synchronously with the mobile IAB cell based on the associated parameter of the mobile IAB cell may include the following two situations. One situation is: determining that the terminal moves synchronously with the mobile IAB cell based on the associated parameter of the mobile IAB cell. Another situation is: determining that the terminal does not move synchronously with the mobile IAB cell based on the associated parameter of the mobile IAB cell. These two situations are described in detail below.

For the situation where the terminal moves synchronously with the mobile IAB cell, in case that a first given condition is satisfied, the determination result is that the terminal moves synchronously with the mobile IAB cell. The first given condition includes that a variation amount of the associated parameter is lower than a first given value and lasts for a first given duration.

A specific value of the first given value and a specific value of the first given duration may be set according to actual needs. The embodiments of the present application do not make any specific restrictions on the specific value of the first given value and the specific value of the first given duration.

For example, taking the case where the associated parameter includes the reference signal received power as an example, in case that a variation amount of the reference signal received power satisfies |SrxlevRef1-Srxlev|<SrxlevDelta1 and lasts for TrxlevDelta1, it is determined that the determination result is that the terminal moves synchronously with the mobile IAB cell, that is, it is determined that the terminal moves synchronously with the mobile IAB cell. SrxlevRef1 represents a reference value of the reference signal received power of the mobile IAB cell, Srxlev represents a reference signal received power of the mobile IAB cell currently monitored by the terminal, and TrxlevDelta1 represents the first given duration that needs to be lasted in case that the associated parameter includes the reference signal received power of the mobile IAB cell.

In an embodiment, the specific value of SrxlevRef1 may be updated. For example, in case that the terminal selects or reselects a new cell, the value of Srxlev may be assigned to SrxlevRef1 to update the specific value of SrxlevRef1. For another example, in case that the duration does not satisfy TrxlevDelta1, the value of Srxlev may be assigned to SrxlevRef1 to update the specific value of SrxlevRef1 . For another example, the value of Srxlev may be assigned to SrxlevRef1 at every given period to update the specific value of SrxlevRef1, etc., which may be set according to actual needs.

For example, taking the case where the associated parameter includes the reference signal received quality as example, in case that a variation amount of the reference signal received quality of the mobile IAB cell satisfies |SqualRef1-Squal|<SqualDelta1, and lasts for TqualDelta1, it is determined that the determination result is that the terminal moves synchronously with the mobile IAB cell, that is, it is determined that the terminal moves synchronously with the mobile IAB cell. SqualRef1 represents a reference value of the reference signal received quality of the mobile IAB cell, Squal represents a reference signal received quality of the mobile IAB cell currently monitored by the terminal, and TqualDelta1 represents the first given duration that needs to be lasted in case that the associated parameter includes the reference signal received quality of the mobile IAB cell.

In an embodiment, the specific value of SqualRef1 may be updated. For example, in case that the terminal selects or reselects a new cell, the value of Squal may be assigned to SqualRef1 to update the specific value of SqualRef1. For another example, in case that the duration does not satisfy SqualDelta1, the value of Squal may be assigned to SqualRef1 to update the specific value of SqualRef1. For another example, the value of Squal may be assigned to SqualRef1 at every given period to update the specific value of SqualRef1, etc., which may be set according to actual needs.

For example, in the embodiments of the present application, the network device may configure SrxlevDelta1, SqualDelta1, TrxlevDelta1 and TqualDelta1 to the terminal through a system broadcast of the mobile IAB cell.

For example, taking the case where the associated parameter includes the relative distance between the terminal and the mobile IAB cell as an example, in case that a variation amount of the relative distance between the terminal and the mobile IAB cell satisfies: |MRef1-M|<MDelta1, and lasts for TDelta1, it is determined that the determination result is that the terminal moves synchronously with the mobile IAB cell, that is, it is determined that the terminal moves synchronously with the mobile IAB cell. MRef1 represents a reference value of a distance between the terminal and a reference location (such as a center of the mobile IAB cell), M represents a current distance between the terminal and the reference location, and TDelta1 represents the first given duration that needs to be lasted in case that the associated parameter includes the relative distance between the terminal and the mobile IAB cell.

In an embodiment, the specific value of MRef1 may be updated. For example, in case that the terminal selects or reselects a new cell, the value of M may be assigned to MRef1 to update the specific value of MRef1. For another example, in case that the duration does not satisfy TDelta1, the value of M may be assigned to MRef1 to update the specific value of MRef1. For another example, the value of M may be assigned to MRef1 at every given period to update the specific value of MRef1, etc., which may be set according to actual needs.

For example, in the embodiments of the present application, the network device may configure the reference location, M, MRef1 and TDelta1 to the terminal through a system broadcast of the mobile IAB cell.

In the above embodiments, how to determine that the terminal moves synchronously with the mobile IAB cell is described in detail, that is, in case that the first given condition is satisfied, the determination result is that the terminal moves synchronously with the mobile IAB cell; on the contrary, in case that the first given condition is not satisfied, the determination result is that the terminal does not move synchronously with the mobile IAB cell. In addition, another method may be used to determine that the terminal does not move synchronously with the mobile IAB cell.

For the case where the terminal does not move synchronously with the mobile IAB cell, in case that the second given condition is satisfied, the determination result is that the terminal does not move synchronously with the mobile IAB cell, where the second given condition includes that a variation amount of the associated parameter is higher than a second given value and lasts for a second given duration.

The specific value of the second given value and the specific value of the second given duration may be set according to actual needs. The embodiments of the present application do not make any specific restrictions on the specific value of the second given value and the specific value of the second given duration.

For example, taking the case where the associated parameter includes the reference signal received power as an example, in case that a variation amount of the reference signal received power satisfies: ISrxlevRef2-Srxlevl>SrxlevDelta2, and lasts for TrxlevDelta2, it is determined that the determination result is that the terminal does not move synchronously with the mobile IAB cell, that is, it is determined that the terminal does not move synchronously with the mobile IAB cell. SrxlevRef2 represents a reference value of the reference signal received power of the mobile IAB cell, Srxlev represents a reference signal received power of the mobile IAB cell currently monitored by the terminal, and TrxlevDelta2 represents the second given duration that needs to be lasted in case that the associated parameter includes the reference signal received power of the mobile IAB cell.

In an embodiment, the specific value of SrxlevRef2 may be updated. For example, in case that the terminal selects or reselects a new cell, the value of Srxlev may be assigned to SrxlevRef2 to update the specific value of SrxlevRef2. For another example, in case that the duration does not satisfy TrxlevDelta2, the value of Srxlev may be assigned to SrxlevRef2 to update the specific value of SrxlevRef2. For another example, the value of Srxlev may be assigned to SrxlevRef2 at every given period to update the specific value of SrxlevRef2, etc., which may be set according to actual needs.

For example, taking the case where the associated parameter includes the reference signal received quality as an example, in case that a variation amount of the reference signal received quality of the mobile IAB cell satisfies: |SqualRef2-Squal|>SqualDelta2, and lasts for TqualDelta2, it is determined that the determination result is that the terminal does not move synchronously with the mobile IAB cell, that is, it is determined that the terminal does not move synchronously with the mobile IAB cell. SqualRef2 represents a reference value of the reference signal received quality of the mobile IAB cell, Squal represents a reference signal received quality of the mobile IAB cell currently monitored by the terminal, and TqualDelta2 represents the second given duration that needs to be lasted in case that the associated parameter includes the reference signal received quality of the mobile IAB cell.

In an embodiment, the specific value of SqualRef2 may be updated. For example, in case that the terminal selects or reselects a new cell, the value of Squal may be assigned to SqualRef2 to update the specific value of SqualRef2. For another example, in case that the duration does not satisfy SqualDelta2, the value of Squal may be assigned to SqualRef2 to update the specific value of SqualRef2. For another example, the value of Squal may be assigned to SqualRef2 at every given period to update the specific value of SqualRef2, etc., which may be set according to actual needs.

For example, in the embodiments of the present application, the network device may configure SrxlevDelta2, SqualDelta2, TrxlevDelta2 and TqualDelta2 to the terminal through a system broadcast of the mobile IAB cell.

For example, taking the case where the associated parameter includes the relative distance between the terminal and the mobile IAB cell as an example, in case that a variation amount of the relative distance between the terminal and the mobile IAB cell satisfies: |MRef2-M|>MDelta2, and lasts for TDelta2, it is determined that the determination result is that the terminal does not move synchronously with the mobile IAB cell, that is, it is determined that the terminal does not move synchronously with the mobile IAB cell. MRef2 represents a reference value of a distance between the terminal and a reference location (such as a center of the mobile IAB cell), M represents a current distance between the terminal and the reference location, and TDelta2 represents the second given duration that needs to be lasted in case that the associated parameter includes the relative distance between the terminal and the mobile IAB cell.

In an embodiment, the specific value of MRef2 may be updated. For example, in case that the terminal selects or reselects a new cell, the value of M may be assigned to MRef2 to update the specific value of MRef2. For another example, in case that the duration does not satisfy TDelta2, the value of M may be assigned to MRef2 to update the specific value of MRef2. For another example, the value of M may be assigned to MRef2 at every given period to update the specific value of MRef2, etc., which may be set according to actual needs.

For example, in the embodiments of the present application, the network device may configure the reference location, M, MRef2 and TDelta2 to the terminal through a system broadcast of the mobile IAB cell.

In the above embodiments, how to determine that the terminal does not move synchronously with the mobile IAB cell is described in detail, that is, in case that the second given condition is satisfied, the determination result is that the terminal does not move synchronously with the mobile IAB cell.

By determining whether the terminal moves synchronously with the mobile IAB cell, in case of performing the subsequent cell reselection operation, the cell reselection operation is performed in combination with the determination result, that is, the terminal moves synchronously with the mobile IAB cell or the terminal does not move synchronously with the mobile IAB cell, which fully considers an impact of the determination result on ping-pong cell reselection operation. In this way, unnecessary ping-pong cell reselection may be effectively avoided, to reduce terminal power consumption.

In an embodiment, in case that the determination result is that the terminal moves synchronously with the mobile IAB cell, the terminal may give priority to reselecting to the mobile IAB cell in case of performing a cell reselection, or may avoid reselecting to other cells in case that the terminal is already in the mobile IAB cell; in case that the determination result is that the terminal does not move synchronously with the mobile IAB cell, the terminal may lower the reselection priority of the mobile IAB cell in case of performing a cell reselection, to avoid reselecting to the mobile IAB cell, or in case that the terminal is already in the mobile IAB cell, it is necessary to accelerate the reselection to other cells, which may effectively avoid unnecessary ping-pong cell reselection, to reduce terminal power consumption.

By determining whether the terminal moves synchronously with the mobile IAB cell, after obtaining the determination result, the cell reselection operation may be performed based on the determination result, that is, the above S302 is performed. For example, in case of performing the cell reselection operation based on the determination result, it may be described in combination with a same-frequency scenario and a different-frequency scenario.

For example, in case that the determination result is that the terminal moves synchronously with the mobile IAB cell, in case of performing the cell reselection operation in the same-frequency scenario, at least the following two possible implementations may be included.

In one possible implementation, it may be first determined whether the mobile IAB cell satisfies an S criterion. In case that the mobile IAB cell satisfies the S criterion, an intra-frequency measurement for cell reselection is not carried out, and the terminal is reselected to the mobile IAB cell that satisfies the S criterion to perform the cell reselection operation. In this way, unnecessary ping-pong cell reselection may be effectively avoided, to reduce terminal power consumption.

In another possible implementation, it may be determined that in case of performing the cell reselection operation, a reselection priority of the mobile IAB cell is higher than a reselection priority of other cells of the same-frequency, that is, in a procedure of performing the cell reselection operation, the reselection priority of the mobile IAB cell is ranked highest among all cells of the same-frequency. In this way, in case that the mobile IAB cell satisfies the requirements such as signal quality, the terminal may be reselected to the mobile IAB cell that satisfies the S criterion to perform the cell reselection operation. As such, unnecessary ping-pong cell reselection may be effectively avoided, to reduce terminal power consumption.

For example, in case that the determination result is that the terminal moves synchronously with the mobile IAB cell, in case of performing the cell reselection operation in the different-frequency scenario, at least the following two possible implementations may be included.

In one possible implementation, it may be first determined whether the mobile IAB cell satisfies the S criterion. In case that the mobile IAB cell satisfies the S criterion, an inter-frequency measurement for cell reselection is not carried out, and the terminal is reselected to the mobile IAB cell that satisfies the S criterion to perform the cell reselection operation. In this way, unnecessary ping-pong cell reselection may be effectively avoided, to reduce terminal power consumption.

In another possible implementation, it may be determined that in case of performing the cell reselection operation, a reselection priority of a frequency corresponding to the mobile IAB cell is higher than a reselection priority of other frequencies, that is, in a procedure of performing the cell reselection operation, a reselection priority of a serving cell of the frequency corresponding to the mobile IAB cell is ranked highest. As such, the terminal does not reselect to cells of other frequencies to perform the cell reselection operation in case that the other frequencies do not satisfy a cell selection signal power/quality threshold for low-priority frequencies. In this way, unnecessary ping-pong cell reselection may be effectively avoided, to reduce terminal power consumption.

The above describes in detail the solutions of how to perform the cell reselection operation in case that the terminal moves synchronously with the mobile IAB cell in combination with the same frequency scenario and the different-frequency scenario. The solutions of how to perform the cell reselection operation in case that the terminal does not move synchronously with the mobile IAB cell are described below in detail in combination with the same frequency scenario and the different-frequency scenario.

For example, in case that the determination result is that the terminal does not move synchronously with the mobile IAB cell, in case of performing the cell reselection operation in the same-frequency scenario, it may be determined that in case of performing the cell reselection operation, a reselection priority of the mobile IAB cell is lower than a reselection priority of other cells of the same-frequency, that is, in a procedure of performing the cell reselection operation, the reselection priority of the mobile IAB cell is ranked lowest among all same-frequency cells. In this way, as long as there is another same-frequency cell that satisfies the S criterion, the terminal does not reselect to the mobile IAB cell to perform the cell reselection operation. As such, unnecessary ping-pong cell reselection may be effectively avoided, to reduce terminal power consumption.

For example, in case that the determination result is that the terminal does not move synchronously with the mobile IAB cell, in case of performing the cell reselection operation in the different-frequency scenario, it may be determined that in case of performing the cell reselection operation, a reselection priority of a frequency corresponding to the mobile IAB cell is lower than a reselection priority of other frequencies, that is, in a procedure of performing the cell reselection operation, a reselection priority of a serving cell of the frequency corresponding to the mobile IAB cell is ranked lowest. As such, the terminal does not reselect to the mobile IAB cell to perform the cell reselection operation in case that other different-frequency cells satisfy a cell selection signal power/quality threshold for high-priority frequencies. In this way, unnecessary ping-pong cell reselection may be effectively avoided, to reduce terminal power consumption.

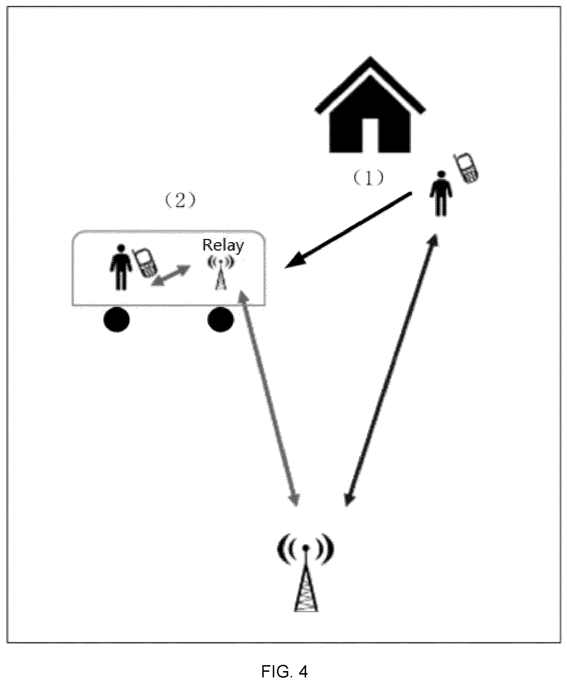

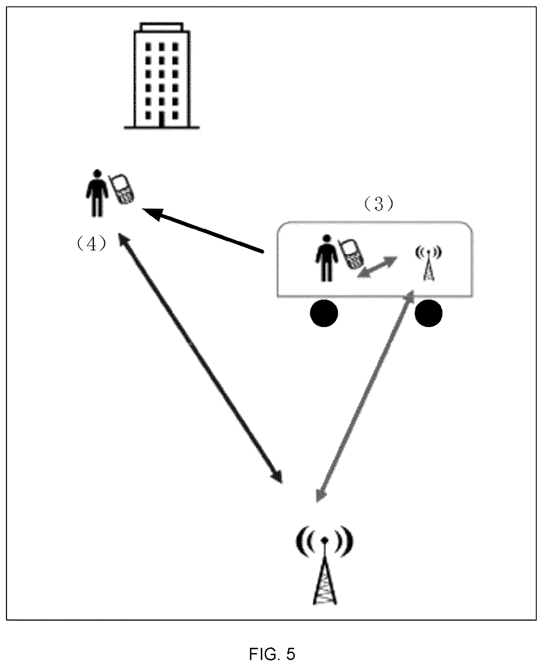

For example, in an application scenario, it is assumed that a user is riding in a vehicle equipped with a mobile IAB-node, camps in a mobile IAB cell of the mobile IAB-node, and moves synchronously with the mobile IAB cell. For example, as shown in FIG. 4 and FIG. 5, FIG. 4 is a schematic diagram of a first application scenario according to an embodiment of the present application, and FIG. 5 is a schematic diagram of a second application scenario according to an embodiment of the present application. As shown in FIG. 4(2) and FIG. 5(3), in case of performing a cell reselection in this application scenario, in case that the mobile IAB cell satisfies an S criterion, an intra-frequency measurement and an inter-frequency measurement for cell reselection are not carried out, to prevent the terminal from reselecting to other same-frequency cells or different-frequency cells. Instead, the terminal is reselected to the mobile IAB cell that satisfies the S criterion to perform the cell reselection operation. In an embodiment, in the same-frequency scenario, a reselection priority of the mobile IAB cell is higher than a reselection priority of other cells of the same-frequency, to prevent the terminal from reselecting to other cells of the same-frequency. In this way, in case that the mobile IAB cell satisfies the requirements such as signal quality, the terminal may be reselected to the mobile IAB cell that satisfies the S criterion to perform the cell reselection operation. In an embodiment, in the different-frequency scenario, a reselection priority of a frequency corresponding to the mobile IAB cell is higher than a reselection priority of other frequencies. As such, as long as the other frequencies do not satisfy a cell selection signal power/quality threshold for low-priority frequencies, the terminal does not reselect to cells of other frequencies to perform the cell reselection operation. In this way, unnecessary ping-pong cell reselection may be effectively avoided, to reduce terminal power consumption.

For example, in another application scenario, it is assumed that a user gets off a vehicle equipped with a mobile IAB-node, that is, the terminal currently camps in a mobile IAB cell of the mobile IAB-node, but does not move synchronously with the mobile IAB cell. For example, as shown in FIG. 5(4) above, in case of performing a cell reselection in this application scenario, in the same-frequency scenario, an intra-frequency measurement may be performed, and it is determined that a reselection priority of the mobile IAB cell is lower than a reselection priority of other cells of the same-frequency. In this way, as long as there is another cell with the same frequency that satisfies the S criterion, the terminal does not reselect to the mobile IAB cell to perform the cell reselection operation. In an embodiment, in the different-frequency scenario, an inter-frequency measurement may be performed, and it is determined that a reselection priority of a frequency corresponding to the mobile IAB cell is lower than a reselection priority of other frequencies. In this way, as long as there is another different-frequency cell that satisfies a cell selection signal power/quality threshold for high-priority frequencies, the terminal does not reselect to the mobile IAB cell to perform the cell reselection operation. As such, unnecessary ping-pong cell reselection may be effectively avoided, to reduce terminal power consumption.

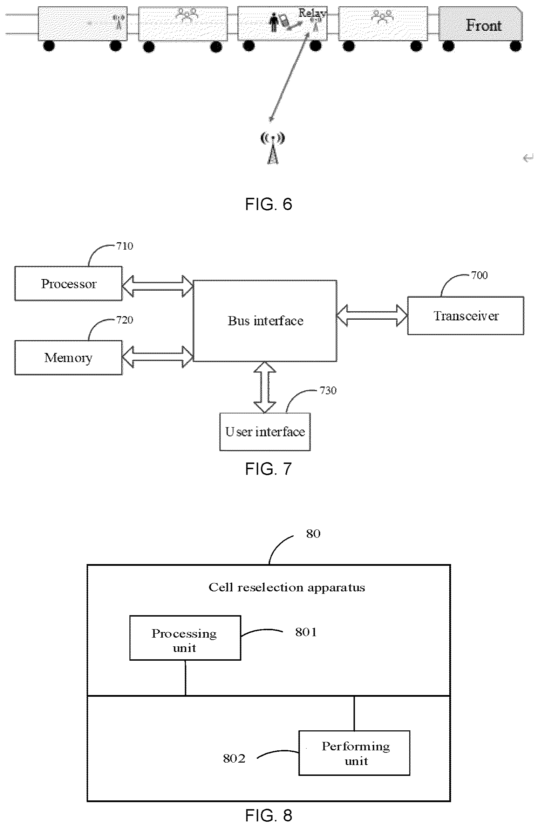

For example, in another application scenario, it is assumed that a user moves in a vehicle equipped with multiple mobile IAB-nodes, and moves with the multiple mobile IAB cells in the vehicle. For example, as shown in FIG. 6, FIG. 6 is a schematic diagram of a third application scenario according to an embodiment of the present application, and in case of performing a cell reselection in this application scenario, it is necessary to prevent the terminal from reselecting to other cells except the mobile IAB cells in the vehicle. As such, unnecessary ping-pong cell reselection may be effectively avoided, to reduce terminal power consumption.

For example, in another application scenario, it is assumed that the terminal is not currently camping in the mobile IAB cell, but in other cells. In one case, in case that a vehicle equipped with a mobile IAB-node moves close to the terminal outside the vehicle, the terminal outside the vehicle does not move synchronously with the mobile IAB cell on the vehicle. In this case, in case of performing a cell reselection, it is necessary to prevent the terminal outside the vehicle from reselecting to the mobile IAB cell on the vehicle. In the same-frequency scenario, a reselection priority of the mobile IAB cell may be set lower than a reselection priority of other cells of the same-frequency. As such, as long as there is a cell with the same frequency that satisfies the S criterion, the terminal does not reselect to the mobile IAB cell to perform the cell reselection operation. In an embodiment, in the different-frequency scenario, an inter-frequency measurement may be performed, and a reselection priority of a frequency corresponding to the mobile IAB-node may be set lower than a reselection priority of other frequencies. As such, as long as there is another different-frequency cell that satisfies a cell selection signal power/quality threshold for high-priority frequency, the terminal does not reselect to the mobile IAB cell to perform the cell reselection operation. In this way, unnecessary ping-pong cell reselection may be effectively avoided, to reduce the terminal power consumption.

In another case, as shown in FIG. 4(1), in case that a user outside a vehicle gets on a vehicle equipped with a mobile IAB-node, the terminal moves synchronously with the mobile IAB cell on the vehicle. In this case, in case of performing a cell reselection, it is necessary to accelerate the reselection to the mobile IAB cell on the vehicle. In case that the mobile IAB cell satisfies an S criterion, an intra-frequency measurement and an inter-frequency measurement for cell reselection are not carried out to prevent the terminal from reselecting to other same-frequency cells or different-frequency cells. Instead, the terminal is reselected to the mobile IAB cell that satisfies the S criterion to perform the cell reselection operation. In an embodiment, in the same-frequency scenario, a reselection priority of the mobile IAB cell is set higher than a reselection priority of other cells of the same-frequency to prevent the terminal from reselecting to other cells of the same-frequency. As such, as long as the mobile IAB cell satisfies the S criterion, the terminal is reselected to the mobile IAB cell that satisfies the S criterion to perform the cell reselection operation. In an embodiment, in the different-frequency scenario, a reselection priority of a frequency corresponding to the mobile IAB cell is higher than a reselection priority of other frequencies. As such, as long as there is another frequency that does not satisfy a cell selection signal power/quality threshold for low-priority frequency, the terminal does not reselect to the cell of another frequency to perform cell reselection operation. In this way, unnecessary ping-pong cell reselection may be effectively avoided, to reduce terminal power consumption.

FIG. 7 is a schematic structural diagram of a terminal according to an embodiment of the present application. As shown in FIG. 7, the terminal includes a memory 720, a transceiver 700, and a processor 710,
where the memory 720 is used for storing a computer program; the transceiver 700 is used for receiving and transmitting data under control of the processor 710; and the processor 710 is used for reading the computer program in the memory 720 and performing following operations:
determining whether the terminal moves synchronously with a mobile integrated access and backhaul (IAB) cell; and
performing a cell reselection based on a determination result.

In an embodiment, the transceiver 700 is used for receiving and transmitting data under control of the processor 710.

In FIG. 7, a bus architecture may include any number of interconnected buses and bridges, which are linked together through various circuits of one or more processors represented by the processor 710 and one or more memories represented by the memory 720. The bus architecture may also link together various other circuits, such as peripherals, voltage regulators, and power management circuits, etc., which are well known in the art, and therefore are not further described in the present application. The bus interface provides an interface. The transceiver 700 may include multiple elements, i.e., including a transmitter and a receiver, units for providing communication with various other devices over transmission media including wireless channels, wired channels, fiber optic cables, and the like. For different user devices, a user interface 730 may be an interface that may be connected to external and internal devices, and the connected devices include but are not limited to keypads, displays, speakers, microphones, joysticks, etc.

The processor 710 is responsible for managing the bus architecture and general processing, and the memory 720 may store data used by the processor 710 when performing operations.

In an embodiment, the processor 710 may be a central processing unit (CPU), an application specific integrated circuit (ASIC), a field-programmable gate array (FPGA), or a complex programmable logic device (CPLD), the processor may also use a multi-core architecture.

The processor calls the computer program stored in the memory to execute any of the methods provided by the embodiments of the present application according to the obtained executable instructions. The processor and the memory may also be arranged physically separately.

In an embodiment of the present application, determining whether the terminal moves synchronously with the mobile IAB cell includes:
determining whether the terminal moves synchronously with the mobile IAB cell based on an associated parameter of the mobile IAB cell;
where the associated parameter includes at least one of following:
   a reference signal received power;
   a reference signal received quality; or
   a relative distance between the terminal and the mobile IAB cell.

In an embodiment of the present application, determining whether the terminal moves synchronously with the mobile IAB cell based on the associated parameter of the mobile IAB cell includes:
in case that a first given condition is satisfied, the determination result is that the terminal moves synchronously with the mobile IAB cell, where the first given condition includes that a variation amount of the associated parameter is lower than a first given value and lasts for a first given duration;
   or,
in case that a first given condition is not satisfied, the determination result is that the terminal does not move synchronously with the mobile IAB cell;
   or,
in case that a second given condition is satisfied, the determination result is that the terminal does not move synchronously with the mobile IAB cell, where the second given condition includes that a variation amount of the associated parameter is higher than a second given value and lasts for a second given duration.

In an embodiment of the present application, performing the cell reselection operation based on the determination result includes:
if the determination result is that the terminal moves synchronously with the mobile IAB cell, in case that the mobile IAB cell satisfies an S criterion, an intra-frequency measurement and an inter-frequency measurement for cell reselection are not carried out.

In an embodiment of the present application, performing the cell reselection operation based on the determination result includes:
if the determination result is that the terminal moves synchronously with the mobile IAB cell, in case that it is determined to perform the cell reselection operation, a reselection priority of the mobile IAB cell is higher than a reselection priority of other cells with a same frequency.

In an embodiment of the present application, performing the cell reselection operation based on the determination result includes:
if the determination result is that the terminal moves synchronously with the mobile IAB cell, in case that it is determined to perform the cell reselection operation, a reselection priority of a frequency corresponding to the mobile IAB cell is higher than a reselection priority of other frequencies.

In an embodiment of the present application, performing the cell reselection operation based on the determination result includes:
if the determination result is that the terminal does not move synchronously with the mobile IAB cell, in case that it is determined to perform the cell reselection operation, a reselection priority of the mobile IAB cell is lower than a reselection priority of other cells with a same frequency.

In an embodiment of the present application, performing the cell reselection operation based on the determination result includes:
if the determination result is that the terminal does not move synchronously with the mobile IAB cell, in case that it is determined to perform the cell reselection operation, a reselection priority of a frequency corresponding to the mobile IAB cell is lower than a reselection priority of other frequencies.

In an embodiment of the present application, determining whether the terminal moves synchronously with the mobile IAB cell includes:
receiving a system broadcast message; and
identifying the mobile IAB cell and determining whether the terminal moves synchronously with the mobile IAB cell.

In an embodiment of the present application, identifying the mobile IAB cell includes:
determining a cell as the mobile IAB cell by a mobile IAB cell type identifier included in the system broadcast message.

It should be noted here that the above-mentioned terminal provided in the embodiments of the present application may implement all the method steps implemented by the method embodiments in which the execution subject is the terminal, and may achieve the same effects. The same parts and beneficial effects in the embodiments as those in the method embodiments are not described in detail.

In addition, an embodiment of the present application provides a cell reselection apparatus, to solve a problem of how to perform a cell reselection in a mobile IAB-node scenario. The cell reselection apparatus and the cell reselection method are based on the same concept, and since the apparatus and the method solve problems in similar principles, the implementations of the apparatus and method may be referred to each other, and the same details are not repeated.

An embodiment of the present application provides a cell reselection apparatus, which is used in a terminal. For example, as shown in FIG. 8, FIG. 8 is a schematic structural diagram of a cell reselection apparatus according to an embodiment of the present application. The cell reselection apparatus 80 includes:
a processing unit 801, used for determining whether the terminal moves synchronously with a mobile integrated access and backhaul (IAB) cell; and
a performing unit 802, used for performing a cell reselection based on a determination result.

In an embodiment of the present application, the processing unit 801 is used for determining whether the terminal moves synchronously with the mobile IAB cell based on an associated parameter of the mobile IAB cell;
where the associated parameter includes at least one of following:
a reference signal received power;
a reference signal received quality; or
a relative distance between the terminal and the mobile IAB cell.

In an embodiment of the present application, the processing unit 801 is used for:
in case that a first given condition is satisfied, the determination result is that the terminal moves synchronously with the mobile IAB cell, where the first given condition includes that a variation amount of the associated parameter is lower than a first given value and lasts for a first given duration;
   or,
in case that a first given condition is not satisfied, the determination result is that the terminal does not move synchronously with the mobile IAB cell;
   or,
in case that a second given condition is satisfied, the determination result is that the terminal does not move synchronously with the mobile IAB cell, where the second given condition includes that a variation amount of the associated parameter is higher than a second given value and lasts for a second given duration.

In an embodiment of the present application, the performing unit 802 is used for:
if the determination result is that the terminal moves synchronously with the mobile IAB cell, in case that the mobile IAB cell satisfies an S criterion, an intra-frequency measurement and an inter-frequency measurement for cell reselection are not carried out.

In an embodiment of the present application, the performing unit 802 is used for:
if the determination result is that the terminal moves synchronously with the mobile IAB cell, in case that it is determined to perform the cell reselection operation, a reselection priority of the mobile IAB cell is higher than a reselection priority of other cells with a same frequency.

In an embodiment of the present application, the performing unit 802 is used for:
if the determination result is that the terminal moves synchronously with the mobile IAB cell, in case that it is determined to perform the cell reselection operation, a reselection priority of a frequency corresponding to the mobile IAB cell is higher than a reselection priority of other frequencies.

In an embodiment of the present application, the performing unit 802 is used for:
if the determination result is that the terminal does not move synchronously with the mobile IAB cell, in case that it is determined to perform the cell reselection operation, a reselection priority of the mobile IAB cell is lower than a reselection priority of other cells with a same frequency.

In an embodiment of the present application, the performing unit 802 is used for:
if the determination result is that the terminal does not move synchronously with the mobile IAB cell, in case that it is determined to perform the cell reselection operation, a reselection priority of a frequency corresponding to the mobile IAB cell is lower than a reselection priority of other frequencies.

In an embodiment of the present application, the cell reselection apparatus further includes a receiving unit, used for receiving a system broadcast message;
the processing unit 801 is used for identifying the mobile IAB cell and determining whether the terminal moves synchronously with the mobile IAB cell.

In an embodiment of the present application, the processing unit 801 is used for:
determining a cell as the mobile IAB cell by a mobile IAB cell type identifier included in the system broadcast message.

It should be noted here that the cell reselection apparatus 80 provided in the embodiments of the present application may implement all the method steps implemented by the method embodiments in which the execution subject is the terminal, and may achieve the same effects. The same parts and beneficial effects in the embodiments as those in the method embodiments are not described in detail.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor readable storage medium. Based on such understanding, the solutions of the present application in essence or a part of the solutions that contributes to the prior art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes, such as a U disk, a mobile hard disk, a read-only memory (ROM), a random access memory (RAM), a magnetic disk, or a compact disk.

An embodiment of the present application provides a processor-readable storage medium, where the processor-readable storage medium stores a computer program, the computer program is used to cause a processor to perform the method provided by the various embodiments of the present application. The method includes: determining whether a terminal moves synchronously with a mobile integrated access and backhaul (IAB) cell; and performing a cell reselection based on a determination result.

The processor readable storage medium may be any available medium or data storage device that may be accessed by the processor, including but not limited to magnetic storage (such as floppy disks, hard disks, magnetic tapes, magneto-optical disks (MO)), optical storage (such as CDs, DVDs, BDs, HVDs, etc.), and semiconductor storage (such as ROM, EPROM, EEPROM, non-volatile memory (NAND FLASH), solid-state drives (SSDs)), etc.

As will be appreciated by those skilled in the art, embodiments of the present application may be provided as methods, systems, or computer program products. Therefore, the present application may take the form of an entirely hardware embodiment, an entirely software embodiment, or an embodiment combining software and hardware. Moreover, the present application may take the form of a computer program product implemented on one or more computer-usable storage media having computer-usable program code, including but not limited to disk storage and optical storage, etc.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor readable memory capable of directing a computer or other programmable data processing apparatus to operate in a particular manner, and the instructions stored in the processor readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

## Claims

1. A cell reselection method, performed by a terminal, the cell reselection method comprising:
determining whether the terminal moves synchronously with a mobile integrated access and backhaul (IAB) cell; and
performing a cell reselection based on a determination result.

2. The cell reselection method of claim 1, wherein determining whether the terminal moves synchronously with the mobile IAB cell comprises:
determining whether the terminal moves synchronously with the mobile IAB cell based on an associated parameter of the mobile IAB cell;
wherein the associated parameter comprises at least one of following:
a reference signal received power;
a reference signal received quality; or
a relative distance between the terminal and the mobile IAB cell.

3. The cell reselection method of claim 2, wherein determining whether the terminal moves synchronously with the mobile IAB cell based on the associated parameter of the mobile IAB cell comprises:
in case that a first given condition is satisfied, the determination result is that the terminal moves synchronously with the mobile IAB cell, wherein the first given condition comprises that a variation amount of the associated parameter is lower than a first given value and lasts for a first given duration;
or,
in case that a first given condition is not satisfied, the determination result is that the terminal does not move synchronously with the mobile IAB cell;
or,
in case that a second given condition is satisfied, the determination result is that the terminal does not move synchronously with the mobile IAB cell, wherein the second given condition comprises that a variation amount of the associated parameter is higher than a second given value and lasts for a second given duration.

4. The cell reselection method of any of claims 1 to 3, wherein performing the cell reselection operation based on the determination result comprises:
if the determination result is that the terminal moves synchronously with the mobile IAB cell, in case that the mobile IAB cell satisfies an S criterion, an intra-frequency measurement and an inter-frequency measurement for cell reselection are not carried out.

5. The cell reselection method of any of claims 1 to 3, wherein performing the cell reselection operation based on the determination result comprises:
if the determination result is that the terminal moves synchronously with the mobile IAB cell, in case that it is determined to perform the cell reselection operation, a reselection priority of the mobile IAB cell is higher than a reselection priority of other cells with a same frequency.

6. The cell reselection method of any of claims 1 to 3, wherein performing the cell reselection operation based on the determination result comprises:
if the determination result is that the terminal moves synchronously with the mobile IAB cell, in case that it is determined to perform the cell reselection operation, a reselection priority of a frequency corresponding to the mobile IAB cell is higher than a reselection priority of other frequencies.

7. The cell reselection method of any of claims 1 to 3, wherein performing the cell reselection operation based on the determination result comprises:
if the determination result is that the terminal does not move synchronously with the mobile IAB cell, in case that it is determined to perform the cell reselection operation, a reselection priority of the mobile IAB cell is lower than a reselection priority of other cells with a same frequency.

8. The cell reselection method of any of claims 1 to 3, wherein performing the cell reselection operation based on the determination result comprises:
if the determination result is that the terminal does not move synchronously with the mobile IAB cell, in case that it is determined to perform the cell reselection operation, a reselection priority of a frequency corresponding to the mobile IAB cell is lower than a reselection priority of other frequencies.

9. The cell reselection method of any of claims 1 to 3, wherein determining whether the terminal moves synchronously with the mobile IAB cell comprises:
receiving a system broadcast message; and
identifying the mobile IAB cell and determining whether the terminal moves synchronously with the mobile IAB cell.

10. The cell reselection method of claim 9, wherein identifying the mobile IAB cell comprises:
determining a cell as the mobile IAB cell by a mobile IAB cell type identifier included in the system broadcast message.

11. A terminal, comprising: a memory, a transceiver, and a processor,
wherein the memory is used for storing a computer program; the transceiver is used for receiving and transmitting data under control of the processor; and the processor is used for reading the computer program in the memory and performing following operations:
determining whether the terminal moves synchronously with a mobile integrated access and backhaul (IAB) cell; and
performing a cell reselection based on a determination result.

12. The terminal of claim 11, wherein determining whether the terminal moves synchronously with the mobile IAB cell comprises:
determining whether the terminal moves synchronously with the mobile IAB cell based on an associated parameter of the mobile IAB cell;
wherein the associated parameter comprises at least one of following:
a reference signal received power;
a reference signal received quality; or
a relative distance between the terminal and the mobile IAB cell.

13. The terminal of claim 12, wherein determining whether the terminal moves synchronously with the mobile IAB cell based on the associated parameter of the mobile IAB cell comprises:
in case that a first given condition is satisfied, the determination result is that the terminal moves synchronously with the mobile IAB cell, wherein the first given condition comprises that a variation amount of the associated parameter is lower than a first given value and lasts for a first given duration;
or,
in case that a first given condition is not satisfied, the determination result is that the terminal does not move synchronously with the mobile IAB cell;
or,
in case that a second given condition is satisfied, the determination result is that the terminal does not move synchronously with the mobile IAB cell, wherein the second given condition comprises that a variation amount of the associated parameter is higher than a second given value and lasts for a second given duration.

14. The terminal of any of claims 11 to 13, wherein performing the cell reselection operation based on the determination result comprises:
if the determination result is that the terminal moves synchronously with the mobile IAB cell, in case that the mobile IAB cell satisfies an S criterion, an intra-frequency measurement and an inter-frequency measurement for cell reselection are not carried out.

15. The terminal of any of claims 11 to 13, wherein performing the cell reselection operation based on the determination result comprises:
if the determination result is that the terminal moves synchronously with the mobile IAB cell, in case that it is determined to perform the cell reselection operation, a reselection priority of the mobile IAB cell is higher than a reselection priority of other cells with a same frequency.

16. The terminal of any of claims 11 to 13, wherein performing the cell reselection operation based on the determination result comprises:
if the determination result is that the terminal moves synchronously with the mobile IAB cell, in case that it is determined to perform the cell reselection operation, a reselection priority of a frequency corresponding to the mobile IAB cell is higher than a reselection priority of other frequencies.

17. The terminal of any of claims 11 to 13, wherein performing the cell reselection operation based on the determination result comprises:
if the determination result is that the terminal does not move synchronously with the mobile IAB cell, in case that it is determined to perform the cell reselection operation, a reselection priority of the mobile IAB cell is lower than a reselection priority of other cells with a same frequency.

18. The terminal of any of claims 11 to 13, wherein performing the cell reselection operation based on the determination result comprises:
if the determination result is that the terminal does not move synchronously with the mobile IAB cell, in case that it is determined to perform the cell reselection operation, a reselection priority of a frequency corresponding to the mobile IAB cell is lower than a reselection priority of other frequencies.

19. The terminal of any of claims 11 to 13, wherein determining whether the terminal moves synchronously with the mobile IAB cell comprises:
receiving a system broadcast message; and
identifying the mobile IAB cell and determining whether the terminal moves synchronously with the mobile IAB cell.

20. The terminal of claim 19, wherein identifying the mobile IAB cell comprises:
determining a cell as the mobile IAB cell by a mobile IAB cell type identifier included in the system broadcast message.

21. A cell reselection apparatus, used in a terminal, the cell reselection apparatus comprising:
a processing unit, used for determining whether the terminal moves synchronously with a mobile integrated access and backhaul (IAB) cell; and
a performing unit, used for performing a cell reselection based on a determination result.

22. The cell reselection apparatus of claim 21, wherein the processing unit is used for determining whether the terminal moves synchronously with the mobile IAB cell based on an associated parameter of the mobile IAB cell;
wherein the associated parameter comprises at least one of following:
a reference signal received power;
a reference signal received quality; or
a relative distance between the terminal and the mobile IAB cell.

23. The cell reselection apparatus of claim 22, wherein the processing unit is used for:
in case that a first given condition is satisfied, the determination result is that the terminal moves synchronously with the mobile IAB cell, wherein the first given condition comprises that a variation amount of the associated parameter is lower than a first given value and lasts for a first given duration;
or,
in case that a first given condition is not satisfied, the determination result is that the terminal does not move synchronously with the mobile IAB cell;
or,
in case that a second given condition is satisfied, the determination result is that the terminal does not move synchronously with the mobile IAB cell, wherein the second given condition comprises that a variation amount of the associated parameter is higher than a second given value and lasts for a second given duration.

24. The cell reselection apparatus of any of claims 21 to 23, wherein the performing unit is used for:
if the determination result is that the terminal moves synchronously with the mobile IAB cell, in case that the mobile IAB cell satisfies an S criterion, an intra-frequency measurement and an inter-frequency measurement for cell reselection are not carried out.

25. The cell reselection apparatus of any of claims 21 to 23, wherein the performing unit is used for:
if the determination result is that the terminal moves synchronously with the mobile IAB cell, in case that it is determined to perform the cell reselection operation, a reselection priority of the mobile IAB cell is higher than a reselection priority of other cells with a same frequency.

26. The cell reselection apparatus of any of claims 21 to 23, wherein the performing unit is used for:
if the determination result is that the terminal moves synchronously with the mobile IAB cell, in case that it is determined to perform the cell reselection operation, a reselection priority of a frequency corresponding to the mobile IAB cell is higher than a reselection priority of other frequencies.

27. The cell reselection apparatus of any of claims 21 to 23, wherein the performing unit is used for:
if the determination result is that the terminal does not move synchronously with the mobile IAB cell, in case that it is determined to perform the cell reselection operation, a reselection priority of the mobile IAB cell is lower than a reselection priority of other cells with a same frequency.

28. The cell reselection apparatus of any of claims 21 to 23, wherein the performing unit is used for:
if the determination result is that the terminal does not move synchronously with the mobile IAB cell, in case that it is determined to perform the cell reselection operation, a reselection priority of a frequency corresponding to the mobile IAB cell is lower than a reselection priority of other frequencies.

29. The cell reselection apparatus of any of claims 21 to 23, wherein the cell reselection apparatus further comprises a receiving unit, used for receiving a system broadcast message;
the processing unit is used for identifying the mobile IAB cell and determining whether the terminal moves synchronously with the mobile IAB cell.

30. The cell reselection apparatus of claim 29, wherein the processing unit is used for:
determining a cell as the mobile IAB cell by a mobile IAB cell type identifier included in the system broadcast message.

31. A processor readable storage medium storing a computer program, wherein the computer program is used for causing a processor to perform the cell reselection method of any of claims 1 to 10.
